# EUROPÄISCHE PATENTANMELDUNG

(11) **EP 3 712 823 A1**
(43) Veröffentlichungstag der Anmeldung: **23.09.2020**
(21) Anmeldenummer: 19164272.7
(22) Anmeldetag: 21.03.2019
(51) Int. Cl.: G06N 3/10, G06F 9/50, G06N 3/04

(54) **VERFAHREN UND VORRICHTUNG ZUR STEUERUNG EINES TECHNISCHEN GERÄTS MITTELS EINEM PROGRAMMCODE**

(71) Anmelder: Siemens Aktiengesellschaft, 80333 München (DE)
(72) Erfinder: Schall, Daniel, 1220 Wien (AT)
(74) Vertreter: Maier, Daniel Oliver

(57) **Zusammenfassung**

Verfahren zur Steuerung eines technischen Geräts (650) mittels einem Programmcode, welcher durch ein System ausgeführt wird und das System ein mehrschichtiges neuronales Netzwerk aufweist und der Programmcode von einem ersten, einem zweiten und einem dritten Programmteil (851-853, 951-953) gebildet ist,
und der erste Programmteil eine erste Menge an Schichten (821, 921) des neuronalen Netzwerks bildet und die Edge-Ausführungsvorrichtung (625, 626) ansteuert,
und der zweite Programmteil eine zweite Menge an Schichten (822) des neuronalen Netzwerks bildet und die Device-Ausführungsvorrichtung (655, 656) ansteuert,
und der dritte Programmteil eine dritte Menge an Schichten (823) des neuronalen Netzwerks bildet und das technische Gerät (650) ansteuert,
und ein Konfigurations-Verfahren (700) ausgeführt wird, welches die erste, die zweite und die dritte Menge an Schichten (821-823, 921) bestimmt, daraus den ersten, zweiten und dritten Programmteil bestimmt und das System den Programmcode ausführt und das technische Gerät (650) ansteuert,
wobei das Konfigurations-Verfahren (700) von einer Eigenschaft des Programmcodes oder des technischen Geräts (650) bestimmt ist.

## Beschreibung

Die Erfindung betrifft ein Verfahren und eine Vorrichtung zur Steuerung eines technischen Geräts mittels einem Programmcode.

Neural Netwerke (NNs), insbesondere Deep Neural Networks (DNNs) oder Deep Convolutional Neural Networks (CNNs) werden in zahlreichen Anwendungen eingesetzt, zum Beispiel im Bereich Computer Vision. Durch diese Anwendungen werden teilweise enorme Datenmengen erzeugt, da sie direkt mit Sensoren, wie beispielsweise Kameras, Mikrofone, Gyroskope verbunden sind, die eine große Menge von Eingangsdaten, beispielsweise in Form von Streaming-Daten erfassen und mittels maschinellen Lernens verarbeitet werden.

Gleichzeitig hat die Anzahl der Endgeräte, einschließlich Internet of Things (IoT) Geräte, dramatisch zugenommen.

Der aktuelle Stand der Technik bei Machine-Learning-Systemen auf Endgeräten führt häufig jedoch zu wenig zufriedenstellenden Einschränkungen:
Einerseits kann das Verlagern von Eingangssensordaten an große NN-Modelle (wie DNNs) in der Cloud zu damit verbundenen hohen Kommunikationskosten, Latenzproblemen und/oder Datenschutzproblemen führen.

Andererseits kann eine Klassifizierung mit einfachen Machine Learning (ML)-Modellen, wie einer linearer Support Vector Machine (SVM), direkt auf dem Endgerät durchgeführt werden, wobei die Systemgenauigkeit jedoch häufig gering ist.

Es sind verteilte tiefe neuronale Netze (DDNNs) über verteilte Rechenhierarchien bekannt, umfassend Cloud, Edge und geografisch verteilte Endgeräte (Devices).

Bei der Implementierung eines DDNN werden häufig Abschnitte eines einzelnen DNN einer verteilten Rechenhierarchie zugeordnet, welche gemeinsam trainiert werden können.

Darüber hinaus kann ein DDNN sogenannte binäre neuronale Netze (BNNs) nutzen.

Es ist Aufgabe der Erfindung, die genannten Unzulänglichkeiten zu verbessern.

Die Aufgabe wird durch ein Verfahren zur Steuerung eines technischen Geräts mittels einem Programmcode gelöst, welcher Programmcode durch ein System ausgeführt wird,
und das System ein mehrschichtiges neuronales Netzwerk mit Schichten, sowie eine Cloud-Ausführungsvorrichtung und eine Device-Ausführungsvorrichtung aufweist,
und der Programmcode von einem ersten Programmteil und einem dritten Programmteil gebildet ist,
und der erste Programmteil eine erste Menge an Schichten des neuronalen Netzwerks bildet und von der Cloud-Ausführungsvorrichtung ausgeführt wird und die Device-Ausführungsvorrichtung ansteuert,
und der dritte Programmteil eine dritte Menge an Schichten des neuronalen Netzwerks bildet und von der Device-Ausführungsvorrichtung ausgeführt wird und das technische Gerät ansteuert,
und vom System ferner ein Konfigurations-Verfahren ausgeführt wird, welches die erste und die dritte Menge an Schichten und den jeweiligen Programmteil entsprechend neu bestimmt, daraus den ersten und dritten Programmteil bestimmt und in die zugehörige Ausführungsvorrichtung lädt, und das System den Programmcode ausführt und das technische Gerät ansteuert,
wobei das Konfigurations-Verfahren von zumindest einer Eigenschaft des Programmcodes oder zumindest einer Eigenschaft des technischen Geräts bestimmt ist.

Dadurch wird erreicht, dass die Konfiguration der einzelnen Programmteile, beziehungsweise deren Verteilung auf einzelne Schichten, dynamisch anpassbar ist.

Die erreichte Flexibilität kann sowohl den aktuellen Datenverkehr im Netz insgesamt berücksichtigen, sowie auch die Servicequalität (QoS, "quality of service") einzelner Dienste, welche von oder zu technischen Geräten zur Verfügung gestellt werden, verbessern.

Ferner kann Verteilung in der Kommunikation verbessert, Latenzzeiten reduziert, der Datenschutz von Nutzer- oder Sensordaten, sowie die Systemgenauigkeit verbessert werden.

Es wird der Ansatz eines verteilten Rechnens in Betracht gezogen. Hierarchisch verteilte Rechenstrukturen, umfassend Cloud, Edge und Geräte, haben inhärente Vorteile, wie beispielsweise die Unterstützung koordinierter zentraler und lokaler Entscheidungen und die Skalierbarkeit des Systems für umfangreiche intelligente Aufgaben basierend auf geografisch verteilten IoT-Geräten.

Ein Beispiel für einen solchen verteilten Ansatzes ist die Kombination eines kleinen NN-Modells (weniger Parameter) auf Endgeräten und eines größeren NN-Modells (mehr Parameter) in der Cloud. Das kleine Modell an einem Endgerät kann schnell eine anfängliche Merkmalsextraktion und auch eine Klassifizierung durchführen, wenn das Modell überzeugt ist (englisch "confidence"). Andernfalls kann das Endgerät das Resultat des kleinen Modells (z.B. extrahierte Merkmale) an das große NN-Modell in der Cloud übergeben, welches die weitere Verarbeitung und die endgültige Klassifizierung vornimmt. Dieser Ansatz hat den Vorteil niedriger Kommunikationskosten im Vergleich zur Abgabe von NN-Eingaben in die Cloud und kann im Vergleich zu einem einfachen Gerätemodell eine höhere Genauigkeit erzielen.

Da eine Zusammenfassung, die auf extrahierten Merkmalen aus dem Endgerätemodell basiert, anstelle von Sensorrohdaten gesendet wird, könnte das System darüber hinaus einen besseren Schutz der Privatsphäre bieten.

Diese Art des verteilten Ansatzes über eine Computerhierarchie hinweg ist jedoch aus mehreren Gründen herausfordernd:
- Endgeräte wie eingebettete Sensorknoten haben oft ein begrenztes Speicher- und Batteriebudget. Dies macht es problematisch, Modelle an die Geräte anzupassen, die die geforderten Genauigkeits- und Energieeinschränkungen erfüllen.
- Eine unkomplizierte Partitionierung von NN-Modellen über eine Berechnungshierarchie kann für die Übertragung von Zwischenergebnissen zwischen den Berechnungsknoten zu hohe Kommunikationskosten verursachen.

Bestärkendes Lernen oder verstärkendes Lernen (englisch "reinforcement learning") steht für eine Reihe von Methoden des maschinellen Lernens, bei denen ein Agent selbständig eine Strategie erlernt, um erhaltene Belohnungen zu maximieren. Dabei wird dem Agenten nicht vorgezeigt, welche Aktion in welcher Situation die beste ist, sondern er erhält zu bestimmten Zeitpunkten eine Belohnung, die auch negativ sein kann. Anhand dieser Belohnungen approximiert er eine Nutzenfunktion, die beschreibt, welchen Wert ein bestimmter Zustand oder Aktion hat.

Ein neuronales Netzwerk wird als Computersystem definiert, welches aus einer Anzahl einfacher, aber stark miteinander verbundener Elemente oder Knoten besteht, die als "Neuronen" bezeichnet werden und in Schichten organisiert sind, die Informationen unter Verwendung dynamischer Zustandsantworten auf externe Eingaben verarbeiten.

Ein künstliches Neuron *j* kann durch vier Basiselemente beschrieben werden:
1. Gewichtung: Gewichte *wᵢⱼ* bestimmen den Grad des Einflusses, den die Eingaben des Neurons in der Berechnung der späteren Aktivierung einnehmen. Abhängig von den Vorzeichen der Gewichte kann eine Eingabe hemmend (inhibitorisch) oder erregend (exzitatorisch) wirken. Ein Gewicht von 0 markiert eine nicht existente Verbindung zwischen zwei Knoten.
2. Übertragungsfunktion: eine Übertragungsfunktion ∑ berechnet anhand der Gewichtung der Eingaben die Netzeingabe des Neurons.
3. Aktivierungsfunktion: Die Ausgabe des Neurons wird schließlich durch die Aktivierungsfunktion *ϕ* bestimmt. Die Aktivierung wird beeinflusst durch die Netzeingabe aus der Übertragungsfunktion sowie einem Schwellenwert.
4. Schwellenwert: Das Addieren eines Schwellenwerts θ*ⱼ* zur Netzeingabe verschiebt die gewichteten Eingaben. Die Bezeichnung bestimmt sich aus der Verwendung einer Schwellenwertfunktion als Aktivierungsfunktion, bei der das Neuron aktiviert wird, wenn der Schwellenwert überschritten ist. Mathematisch gesehen wird die Trennebene, die den Merkmalsraum auftrennt, durch einen Schwellenwert mit einer Translation verschoben.

Durch einen Verbindungsgraphen werden folgende Elemente festgelegt:
1. Eingaben: Eingaben *xᵢ* können einerseits aus dem beobachteten Prozess resultieren, dessen Werte dem Neuron übergeben werden, oder wiederum aus den Ausgaben anderer Neuronen stammen.
2. Aktivierung oder Ausgabe: Das Ergebnis der Aktivierungsfunktion wird analog zur Nervenzelle als Aktivierung o*ⱼ* des künstlichen Neurons *j* bezeichnet.

Damit können auf effiziente Weise Muster gefunden werden, welche für eine manuelle Extraktion zu komplex sind und der Maschine erkannt werden können. Im Zusammenhang mit dieser Struktur werden Muster in das neuronale Netzwerk eingeführt, indem die Eingabeschicht ein Neuron für jede in den Eingabedaten vorhandene Komponente aufweist und an eine oder mehrere im Netzwerk vorhandene verborgene Schichten kommuniziert.

Das tiefgehende Lernen (englisch "Deep Learning" bezeichnet eine Klasse von Optimierungsmethoden künstlicher neuronaler Netze, die zahlreiche Zwischenschichten (englisch "hidden layers") zwischen Eingabeschicht und Ausgabeschicht haben und dadurch eine umfangreiche innere Struktur aufweisen. In Erweiterungen der Lernalgorithmen für Netzstrukturen mit sehr wenigen oder keinen Zwischenlagen, wie beim einlagigen Perzeptron, ermöglichen die Methoden des Deep Learnings auch bei zahlreichen Zwischenlagen einen stabilen Lernerfolg.

Die Teilprogramme einzelner Schichten können auch als Instanzen bezeichnet werden. Die verwendeten Instanzen müssen sowohl auf der Sender- als auch auf der Empfängerseite einer Schicht nach festgelegten Regeln arbeiten, um die Verarbeitung von Daten zu ermöglichen. Die Festlegung dieser Regeln wird in einem Protokoll beschrieben und bildet eine logische, horizontale Verbindung zwischen zwei Instanzen derselben Schicht.

Jede Instanz stellt Dienste zur Verfügung, die eine direkt darüberliegende Instanz nutzen kann. Zur Erbringung der Dienstleistung bedient sich eine Instanz selbst der Dienste der unmittelbar darunterliegenden Instanz. Der reale Datenfluss erfolgt daher vertikal. Die Instanzen einer Schicht sind genau dann austauschbar, wenn sie sowohl beim Sender als auch beim Empfänger ausgetauscht werden können.

In einer bevorzugten Weiterbildung der Erfindung ist es vorgesehen, dass die erste und die dritte Menge an Schichten zusammen die Schichten des mehrschichtigen neuronalen Netzwerks bilden. Somit sind zwei Mengen an Schichten umfasst, was eine einfache und dennoch dynamisch konfigurierbare Architektur unterstützt.

Die erfindungsgemäße Aufgabe wird auch durch ein Verfahren zur Steuerung eines technischen Geräts mittels einem Programmcode gelöst, welcher Programmcode durch ein System ausgeführt wird,
und das System ein mehrschichtiges neuronales Netzwerk mit Schichten sowie eine Cloud-Ausführungsvorrichtung, eine Edge-Ausführungsvorrichtung und eine Device-Ausführungsvorrichtung aufweist und der Programmcode von einem ersten Programmteil, einem zweiten Programmteil und einem dritten Programmteil gebildet ist,
und der erste Programmteil eine erste Menge an Schichten des neuronalen Netzwerks bildet und von der Cloud-Ausführungsvorrichtung ausgeführt wird und die Edge-Ausführungsvorrichtung ansteuert,
und der zweite Programmteil eine zweite Menge an Schichten des neuronalen Netzwerks bildet und von der Edge- Ausführungsvorrichtung ausgeführt wird und die Device-Ausführungsvorrichtung ansteuert,
und der dritte Programmteil eine dritte Menge an Schichten des neuronalen Netzwerks bildet und von der Device-Ausführungsvorrichtung ausgeführt wird und das technische Gerät ansteuert,
und ein Konfigurations-Verfahren ausgeführt wird, welches die erste, die zweite und die dritte Menge an Schichten bestimmt, daraus den ersten, zweiten und dritten Programmteil bestimmt und in die zugehörige Ausführungsvorrichtung, lädt, und das System den Programmcode ausführt und das technische Gerät ansteuert,
wobei das Konfigurations-Verfahren von zumindest einer Eigenschaft des Programmcodes oder zumindest einer Eigenschaft des technischen Geräts bestimmt ist.

In dieser Verfahrens-Variante der Erfindung ist zusätzlich ein Edge-Abschnitt zwischen der Cloud und dem Endgerät vorgesehen, was für eine höhere Flexibilität genutzt werden kann.

In einer bevorzugten Weiterbildung der Erfindung ist es vorgesehen, dass die erste, die zweite und die dritte Menge an Schichten zusammen die Schichten der mehrschichtigen neuronalen Netzwerks bilden. Somit sind drei Mengen an Schichten umfasst, was eine besonders effiziente und dennoch flexibel konfigurierbare Architektur unterstützt.

In einer bevorzugten Weiterbildung der Erfindung ist es vorgesehen, dass die Eigenschaften des Programmcodes die Eigenschaften des technischen Geräts oder die Eigenschaften des Programmcodes die Eigenschaften bei der Ansteuerung des technischen Geräts betreffen, vorzugsweise Quality-of-Service, Latenzzeit, Bandbreite für eine Datenübertragung. Dadurch kann auf einfache Weise ein effizientes und flexibles Verfahren zur Steuerung des technischen Geräts geschaffen werden. In einer bevorzugten Weiterbildung der Erfindung ist es vorgesehen, dass das Konfigurations-Verfahren auf dem Prinzip des maschinellen Lernens beruht, vorzugsweise auf der Anwendung des Prinzips des "Reinforcement Learnings" auf DDNN. Dadurch wird eine besonders effiziente Bestimmung der Konfiguration erreicht.

In einer bevorzugten Weiterbildung der Erfindung ist es vorgesehen, dass das Konfigurations-Verfahren fortlaufend ausgeführt wird und die erste, die zweite und die dritte Menge an Schichten und den jeweiligen Programmteil entsprechend neu bestimmt.

Dadurch wird erreicht, dass das Verfahren dynamisch mit Änderungen des Systems in einer Cloud beziehungsweise einem Netzwerk anpassbar ist.

In einer bevorzugten Weiterbildung der Erfindung ist es vorgesehen, dass das Konfigurations-Verfahren erneut ausgeführt wird, wenn ein vorbestimmter Zeitpunkt erreicht ist oder ein vorbestimmtes Ereignis vorliegt. Dadurch kann beispielsweise eine zeitliche Vorgabe an ein QoS unterstützt werden. Dies kann Zeitplan-gesteuert oder auch Anlass-gesteuert erfolgen.

In einer bevorzugten Weiterbildung der Erfindung ist es vorgesehen, dass der Programmcode mehr als 10 Schichten, bevorzugt mehr als 20 Schichten, besonders bevorzugt mehr als 50 Schichten, mehr als 100 Schichten, und insbesondere mehr als 150 Schichten aufweist.

Es können in komplexen Software-Systemen, insbesondere für Steuer- und Messaufgaben mittels verteilter IoT-Geräte, mehr als 10 Schichten, mehr als 20 Schichten, mehr als 50 Schichten, mehr als 100 Schichten, mehr als 150 Schichten oder noch mehr Schichten vorgesehen sein.

Beispiele dafür sind VGGNet mit 19 Schichten, GoogLeNet mit 22 Schichten oder ResNet mit 152 Schichten.

Die erfindungsgemäße Aufgabe wird auch durch ein System zur Steuerung eines technischen Geräts mittels einem Programmcode gelöst, wobei das System ein mehrschichtiges neuronales Netzwerk mit Schichten, sowie eine Cloud-Ausführungsvorrichtung und eine Device-Ausführungsvorrichtung aufweist,
und der Programmcode von einem ersten Programmteil und einem dritten Programmteil gebildet ist,
und der erste Programmteil eine erste Menge an Schichten des neuronalen Netzwerks bildet und die Cloud-Ausführungsvorrichtung dazu eingerichtet ist, den ersten Programmteil auszuführen die Device-Ausführungsvorrichtung anzusteuern,
und der dritte Programmteil eine dritte Menge an Schichten des neuronalen Netzwerks bildet und die Device-Ausführungsvorrichtung dazu eingerichtet ist, den dritten Programmteil auszuführen und das technische Gerät anzusteuern,
und eine Konfigurations-Vorrichtung dazu eingerichtet ist, ein Konfigurations-Verfahren auszuführen, welches die erste und die dritte Menge an Schichten bestimmt, daraus den ersten und dritten Programmteil bestimmt und in die zugehörige Ausführungsvorrichtung lädt, und das System dazu eingerichtet ist, den Programmcode auszuführen und das technische Gerät anzusteuern,
wobei das Konfigurations-Verfahren von zumindest einer Eigenschaft des Programmcodes oder zumindest einer Eigenschaft des technischen Geräts bestimmt ist.

Die erfindungsgemäße Aufgabe wird auch durch ein System zur Steuerung eines technischen Geräts mittels einem Programmcode gelöst, wobei das System ein mehrschichtiges neuronales Netzwerk mit Schichten, sowie eine Cloud-Ausführungsvorrichtung, eine Edge-Ausführungsvorrichtung und eine Device-Ausführungsvorrichtung aufweist,
und der Programmcode von einem ersten Programmteil, einem zweiten Programmteil und einem dritten Programmteil gebildet ist,
und der erste Programmteil eine erste Menge an Schichten des neuronalen Netzwerks bildet und eine Cloud dazu eingerichtet ist, die Cloud-Ausführungsvorrichtung auszuführen und die Edge-Ausführungsvorrichtung anzusteuern,
und der zweite Programmteil eine zweite Menge an Schichten des neuronalen Netzwerks bildet und eine Edge-Ausführungsvorrichtung dazu eingerichtet ist, den zweiten Programmteil auszuführen und die Device-Ausführungsvorrichtung anzusteuern,
und der dritte Programmteil eine dritte Menge an Schichten des neuronalen Netzwerks bildet und die Device-Ausführungsvorrichtung dazu eingerichtet ist, den dritten Programmteil auszuführen und das technische Gerät anzusteuern,
und eine Konfigurations-Vorrichtung dazu eingerichtet ist, ein Konfigurations-Verfahren auszuführen, welches die erste, die zweite und die dritte Menge an Schichten bestimmt, daraus den ersten, zweiten und dritten Programmteil bestimmt und in die zugehörige Ausführungsvorrichtung lädt, und das System dazu eingerichtet ist, den Programmcode auszuführen und das technische Gerät anzusteuern,
wobei das Konfigurations-Verfahren von zumindest einer Eigenschaft des Programmcodes oder zumindest einer Eigenschaft des technischen Geräts bestimmt ist.

In dieser System-Variante der Erfindung ist zusätzlich ein Edge-Abschnitt zwischen der Cloud und dem Endgerät vorgesehen, was für eine höhere Flexibilität genutzt werden kann.

In einer bevorzugten Weiterbildung der Erfindung ist es vorgesehen, dass die Edge-Ausführungsvorrichtung in Form eines Cloud-Service vorgesehen ist. Dadurch kann eine flexible, aber auch leistungsfähige Realisierung der Edge-Ausführungsvorrichtung erreicht werden.

In einer bevorzugten Weiterbildung der Erfindung ist es vorgesehen, dass die Cloud-Ausführungsvorrichtung und/oder die Konfigurations-Vorrichtung in Form eines Cloud-Service vorgesehen ist. Dadurch kann eine flexible, aber auch leistungsfähige Realisierung der Cloud-Ausführungsvorrichtung bzw. der Konfigurations-Vorrichtung erreicht werden.

Die Erfindung wird nachfolgend anhand eines in den beigeschlossenen Zeichnungen dargestellten Ausführungsbeispiels näher erläutert. In den Zeichnungen zeigt:
- Fig. 1: eine allgemeine Darstellung eines Cloud-basierten DNN,
- Fig. 2: eine allgemeine Darstellung eines DDNN über eine Cloud und ein Device,
- Fig. 3: eine allgemeine Darstellung eines DDNN über eine Cloud und geographisch verteile Devices,
- Fig. 4: eine allgemeine Darstellung eines DDNN über eine Cloud, eine Edge und ein Device,
- Fig. 5: eine allgemeine Darstellung eines DDNN über eine Cloud, eine Edge und geographisch verteile Devices,
- Fig. 6: eine allgemeine Darstellung eines DDNN über eine Cloud, geographisch verteile Edges und Devices,
- Fig. 7: eine Darstellung einer Anwendung von "Reinforcement Learning" auf DDNN,
- Fig. 8: ein Ausführungsbeispiel des erfindungsgemäßen Verfahrens,
- Fig. 9: eine Darstellung eines ersten Ausführungsbeispiels für einen Programmcode,
- Fig. 10: eine Darstellung eines zweiten Ausführungsbeispiels für einen Programmcode.

Es ist klar, dass weitere nicht gezeigte Verfahrensschritte beziehungsweise Komponenten für den Betrieb des Systems erforderlich sind, wie beispielsweise Mittel zur Kommunikation, IO, Speicherung oder Verarbeitung. Zum besseren Verständnis werden diese Teile nicht dargestellt und beschrieben.

Das Verfahren gemäß der Erfindung kann als ein Computerprogramm auf einer Computerplattform oder einem Computersystem ausgeführt werden, wobei das System eine lokale oder verteilte Systemarchitektur aufweisen kann.

Darüber hinaus ist es klar, dass mehr als ein IoT-Gerät, das heißt mehrere IoT-Geräte, durch das Verfahren beziehungsweise das System gemäß der Erfindung gesteuert werden können.

Im Weiteren wird mit einem Device beispielsweise ein IoT-Device/ IoT-Gerät oder allgemein ein technisches Gerät bezeichnet.

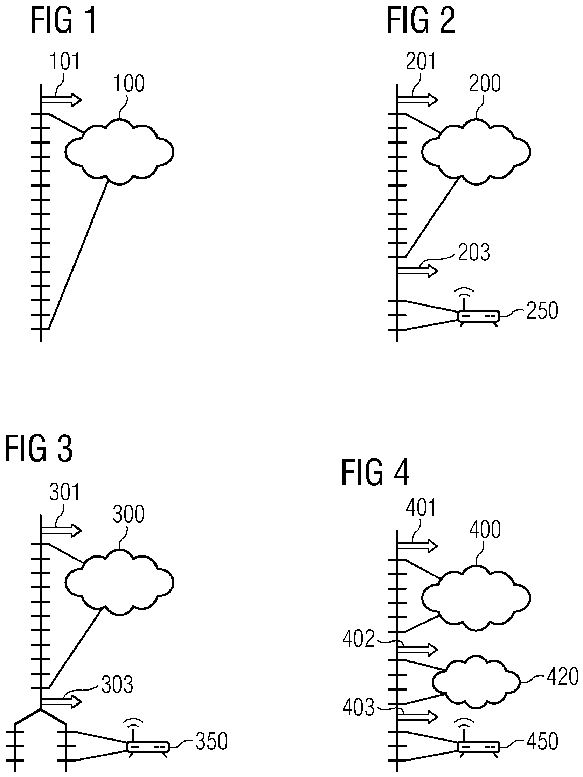

**Fig. 1** zeigt eine allgemeine Darstellung eines Cloud-basierten DNN mit einer Cloud 100. Die Cloud 100 ist über einen Cloud-Ausgang 101 zugänglich, an dem Proben der Cloud klassifiziert werden können.

**Fig. 2** zeigt eine allgemeine Darstellung eines DDNN über eine Cloud 200 und ein Device 250.

Die Cloud 200 ist über einen Cloud-Ausgang 201 zugänglich, an dem Proben der Cloud klassifiziert werden können.

Das Verfahren weist einen lokalen Ausgang 203 auf, an dem Proben vor der Cloud klassifiziert werden können.

**Fig. 3** zeigt eine allgemeine Darstellung eines DDNN über eine Cloud 300 und geographisch verteile Devices 350.

Die Cloud 300 ist über einen Cloud-Ausgang 301 zugänglich, an dem Proben der Cloud klassifiziert werden können.

Das Verfahren weist einen lokalen Ausgang 303 auf, an dem Proben vor der Cloud klassifiziert werden können.

**Fig. 4** zeigt eine allgemeine Darstellung eines DDNN über eine Cloud 400, eine Edge 420 und ein Device 450.

Die Cloud 400 ist über einen Cloud-Ausgang 401 zugänglich, an dem Proben der Cloud klassifiziert werden können.

Ferner weist das Verfahren einen Edge-Ausgang 402 auf, an dem Proben vor der Cloud klassifiziert werden können.

Das Verfahren weist einen lokalen Ausgang 403 auf, an dem Proben vor der Edge klassifiziert werden können.

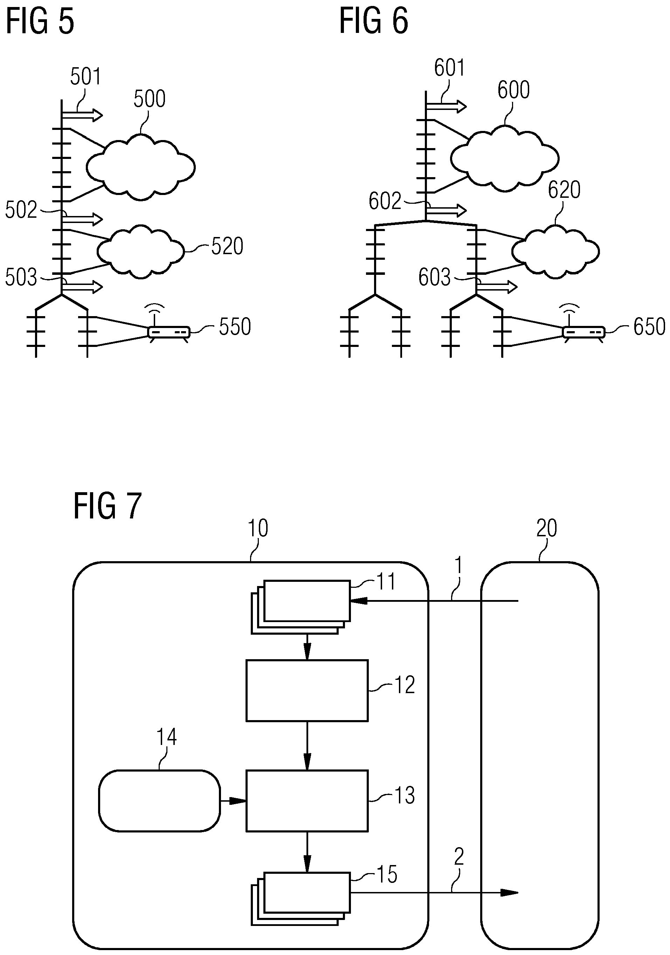

**Fig. 5** zeigt eine allgemeine Darstellung eines DDNN über eine Cloud 500, eine Edge 520 und geographisch verteile Devices 550.

Die Cloud 500 ist über einen Cloud-Ausgang 501 zugänglich, an dem Proben der Cloud klassifiziert werden können.

Ferner weist das Verfahren einen Edge-Ausgang 502 auf, an dem Proben vor der Cloud klassifiziert werden können.

Das Verfahren weist einen lokalen Ausgang 503 auf, an dem Proben vor der Edge klassifiziert werden können.

**Fig. 6** zeigt eine allgemeine Darstellung eines DDNN über eine Cloud 600, geographisch verteile Edges 620 und Devices 650.

Die Cloud 600 ist über einen Cloud-Ausgang 601 zugänglich, an dem Proben der Cloud klassifiziert werden können.

Ferner weist das Verfahren einen Edge-Ausgang 602 auf, an dem Proben vor der Cloud klassifiziert werden können.

Das Verfahren weist einen lokalen Ausgang 603 auf, an dem Proben vor der Edge klassifiziert werden können.

Fig. 1 bis Fig. 6 sind aus dem Stand der Technik bekannt.

**Fig. 7** stellt einer Anwendung von "Reinforcement Learning" auf DDNN dar.

Ein Dienst 10 erfasst Sensorwerte 1 mittels eines oder mehrerer Sensoren 11, welche in einer Umgebung 20 angeordnet sind und bestimmt den aktuellen Status 12.

Aus situationsabhängigen Bedingungen 14 werden aus dem Status 12 eine oder mehrere Aktionen 13 abgeleitet, welche einen oder mehrere Aktuatoren 15 betätigen 2.

Der Dienst 10, der das Verhalten zwischen der Sensor-Datenerfassung 1 und der Aktuator-Betätigung 2 beschreibt, kann durch das erfindungsgemäße Verfahren beziehungsweise durch das erfindungsgemäße System implementiert werden und ein erfindungsgemäß ein verbesserter QoS erreicht werden.

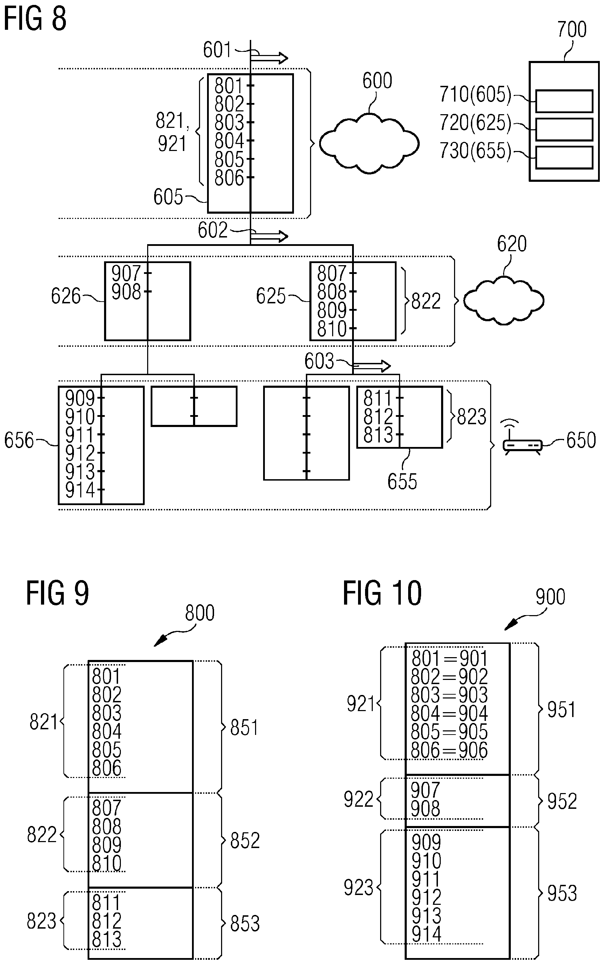

**Fig. 8** zeigt die Systemarchitektur gemäß Fig. 6, auf welche das erfindungsgemäße Verfahren angewendet ist.

Das Verfahren dient zur Steuerung eines technischen Geräts 650 mittels einem Programmcode 800 gemäß der Fig. 9 und einem Programmcode 900 gemäß der Fig. 10, welcher durch ein System ausgeführt wird.

Das System weist ein mehrschichtiges neuronales Netzwerk mit Schichten 801-813, 901-914, sowie eine Cloud-Ausführungsvorrichtung 605, Edge-Ausführungsvorrichtungen 625, 626 und Device-Ausführungsvorrichtungen 655, 656 auf.

Der Programmcode 800, 900 ist von einem ersten Programmteil 851, 951, einem zweiten Programmteil 852, 952 und einem dritten Programmteil 853, 953 gebildet.

Der erste Programmteil 851, 951 bildet eine erste Menge an Schichten 821, 921 des neuronalen Netzwerks und wird von der Cloud-Ausführungsvorrichtung 605 ausgeführt und steuert die Edge-Ausführungsvorrichtung 625, 626 an.

Der zweite Programmteil 852, 952 bildet eine zweite Menge an Schichten 822, 922 des neuronalen Netzwerks und wird von der Edge-Ausführungsvorrichtung 625, 626 ausgeführt und steuert die Device-Ausführungsvorrichtung 655, 656 an.

Der dritte Programmteil 853, 953 bildet eine dritte Menge an Schichten 823, 923 des neuronalen Netzwerks und wird von der Device-Ausführungsvorrichtung 655, 656 ausgeführt und steuert das technische Gerät 650 an.

Die Programmcodes 800, 900 sind für verschiedene Device-Ausführungsvorrichtung 655, 656 des technischen Geräts 650 vorgesehen. Somit zwei verschiedene, geographisch verteilte Geräte gemeint.

Der Programmcode 800 ist zur Ansteuerung eines ersten Geräts mittel der Edge-Ausführungsvorrichtung 625 und der Device-Ausführungsvorrichtung 655 vorgesehen.

Der Programmcode 900 ist zur Ansteuerung eines weiteren Geräts mittel der Edge-Ausführungsvorrichtung 626 und der Device-Ausführungsvorrichtung 656 vorgesehen.

Ein Konfigurations-Verfahren 700 wird ausgeführt und bestimmt die erste, die zweite und die dritte Menge an Schichten 821-823, 921-923.

Ferner bestimmt das Konfigurations-Verfahren 700 im Schritt 710 für die Cloud-Ausführungsvorrichtung 605 aus der ersten Menge an Schichten 821, 921 den ersten Programmteil 851, 951 und in die zugehörige Ausführungsvorrichtung 605 lädt.

Ferner bestimmt das Konfigurations-Verfahren 700 im Schritt 720 für die Edge-Ausführungsvorrichtung 625 aus der zweiten Menge an Schichten 822, 922 den zweiten Programmteil 852, 952 und in die zugehörige Ausführungsvorrichtung 625 lädt.

Ferner bestimmt das Konfigurations-Verfahren 700 im Schritt 730 für die Device-Ausführungsvorrichtung 655 aus der dritten Menge an Schichten 823, 923 den dritten Programmteil 853, 953 und in die zugehörige Ausführungsvorrichtung 655 lädt.

Das System führt den Programmcode 800, 900 aus und steuert das technische Gerät 650 an.

Das Konfigurations-Verfahren 700 ist dabei von zumindest einer Eigenschaft des Programmcodes 800, 900 oder zumindest einer Eigenschaft des technischen Geräts 650 bestimmt.

Die erste, die zweite und die dritte Menge an Schichten 821-823, 921-923 bilden zusammen die Schichten 801-813, 901-914 des mehrschichtigen neuronalen Netzwerks.

Die Eigenschaften des Programmcodes 800, 900 und/oder die Eigenschaften des technischen Geräts betreffen die Eigenschaften bei der Ansteuerung des technischen Geräts 650, beispielsweise ein Quality-of-Service, eine Latenzzeit oder eine Bandbreite für eine Datenübertragung.

Das Konfigurations-Verfahren 700 beruht auf dem Prinzip des maschinellen Lernens, wobei auch das Prinzip des "Reinforcement Learning" auf DDNN angewandt wird, um eine besonders effiziente Konfiguration zu erhalten.

Das Konfigurations-Verfahren 700 wird fortlaufend ausgeführt und die Konfiguration der Schichten dynamisch an Systemparameter wie der aktuelle Datenverkehr im Netz, Anforderungen an Kommunikation, Latenzzeiten, Datenschutz von Nutzer- oder Sensordaten, sowie Systemgenauigkeit angepasst.

Das Konfigurations-Verfahren 700 kann auch erneut ausgeführt werden, wenn ein vorbestimmter Zeitpunkt erreicht ist oder ein vorbestimmtes Ereignis, wie in Form eines Interrupts, vorliegt.

Das Konfigurations-Verfahren kann sowohl die Menge an Schichten wie auch den Programmcode derart anpassen, dass die Gesamtanzahl an Schichten modifiziert wird, um den Programmcode insgesamt effizienter zu machen. Mit anderen Worten kann der jeweils aktuelle Programmcode eine Teilmenge des ursprünglichen Programmcodes sein und somit weniger Schichten aufweisen, als ursprünglich, falls ein Gerät verwendet wird, welches nicht alle Funktionen des ursprünglichen Programmcodes unterstützt oder vorübergehend deaktiviert werden. Dieser Aspekt ist in den Figuren nicht dargestellt.

Die erste, die zweite und die dritte Menge an Schichten 821-823, 921-923, sowie der jeweiligen Programmteil 851-853, 951-953 werden entsprechend fortlaufend neu bestimmt.

Der Programmcode 800, 900 weist in der Figur mehr als zehn Schichten 801-813, 901-914 auf, kann aber durchaus auch mehr Schichten umfassen.

In manchen Anwendungen sind mehr als 150 Schichten des neuronalen Netzwerks vorgesehen.

Proben der Cloud 600 können über den Cloud-Ausgang 601 klassifiziert und für die Konfiguration herangezogen werden.

Proben des Geräts 650 können über den lokalen Ausgang 602 klassifiziert und für die Konfiguration herangezogen werden.

Ferner können Proben der Edge 620 über den Edge-Ausgang 603 klassifiziert werden und für die Konfiguration herangezogen werden.

Ein erfindungsgemäßes System implementiert das erfindungsgemäße Verfahren beispielsweise gemäß der Systemarchitektur der Fig. 8.

Unter dem Gerät 650 kann ein oder mehrere unabhängige IoT-Devices verstanden werden. Zur besseren Übersicht ist nur ein Gerät 650 eingezeichnet.

Die Edge 620 weist in diesem Beispiel zwei Edge-Ausführungsvorrichtungen 625, 626 auf, welche mittels zweier Programmcodes 800, 900 angesteuert werden.

Das Gerät 650 weist in diesem Beispiel vier Device-Ausführungsvorrichtungen auf, wobei zwei Device-Ausführungsvorrichtungen 655, 656, welche mittels der zwei Programmcodes 800, 900 angesteuert werden.

Dadurch soll beispielhaft gezeigt werden, dass unterschiedliche Geräte von einem Verfahren in derselben Cloud 600 aus angesteuert werden können. Es ist klar, dass auch gleichartige Geräte 650 verwendet werden können, wodurch die Pfade der Programmcodes eine gleiche Länge aufweisen, wie in Fig. 6 dargestellt.

Es können die Software-Systemarchitekturen gemäß der Fig. 2 bis 5 als Basis der Erfindung verwendet werden.

Beispielsweise kann eine dynamische Konfiguration zwischen der Cloud 300 und dem verteilten Gerät 350 gemäß der Fig. 3 erfindungsgemäß verwendet werden, das heißt ohne die Verwendung einer Edge.

**Fig. 9** zeigt eine Darstellung eines ersten Ausführungsbeispiels für einen Programmcode 800.

Der erste Programmteil 851 bildet die erste Menge an Schichten 821 des neuronalen Netzwerks mit sechs Schichten 801-806.

Der zweite Programmteil 852 bildet die zweite Menge an Schichten 822 des neuronalen Netzwerks mit vier Schichten 807-810.

Der dritte Programmteil 853 bildet die dritte Menge an Schichten 823 des neuronalen Netzwerks mit drei Schichten 811-813.

Der Programmcode 800 ist dazu vorgesehen, ein Gerät 650, d.h. eine Device-Ausführungsvorrichtung 655 anzusteuern, welches über die Edge 620, d.h. der Edge-Ausführungsvorrichtung 625, mit der Cloud 600, d.h. der Cloud-Ausführungsvorrichtung 605, verbunden ist.

**Fig. 10** zeigt eine Darstellung eines zweiten Ausführungsbeispiels für einen Programmcode 900.

Der erste Programmteil 951 bildet die erste Menge an Schichten 921 des neuronalen Netzwerks mit sechs Schichten 901-906, welche den sechs Schichten 801-806 der Programmcodes 800 entsprechen.

Der zweite Programmteil 952 bildet die zweite Menge an Schichten 922 des neuronalen Netzwerks mit zwei Schichten 907-908.

Der dritte Programmteil 953 bildet die dritte Menge an Schichten 923 des neuronalen Netzwerks mit sechs Schichten 909-914.

Der Programmcode 900 ist dazu vorgesehen, ein Gerät 650, d.h. eine Device-Ausführungsvorrichtung 656 anzusteuern, welches über die Edge 620, d.h. der Edge-Ausführungsvorrichtung 626, mit der Cloud 600, d.h. der Cloud-Ausführungsvorrichtung 605, verbunden ist.

### Bezugszeichenliste:

- 1: Erfassen von Sensordaten
- 2: Betätigung von Aktuatoren
- 10: Dienst
- 11: Sensor(en)
- 12: Status
- 13: Aktionen
- 14: Bedingungen
- 15: Aktuator(en)
- 20: Umgebung
- 100, 200, 300, 400, 500, 600: Cloud
- 101, 201, 301, 401, 501, 601: Cloud Ausgang
- 402, 502, 602: Edge Ausgang
- 203, 303, 403, 503, 603: Lokaler Ausgang
- 250, 350, 450, 550, 650: Geräte
- 420, 520, 620: Edge
- 605: Cloud-Ausführungsvorrichtung
- 625: Edge-Ausführungsvorrichtung
- 655: Device-Ausführungsvorrichtung
- 700: Konfigurations-Verfahren
- 710, 720, 730: Konfiguration der einzelnen Programmteile
- 800, 900: Programmcode
- 801-813, 901-914: Schichten des Programmcode
- 821-823, 921-923: Menge an Schichten
- 851-853, 951-953: Programmteil

## Patentansprüche

1. Verfahren zur Steuerung eines technischen Geräts (650) mittels einem Programmcode (800, 900), welcher durch ein System ausgeführt wird, und das System ein mehrschichtiges neuronales Netzwerk mit Schichten (801-813, 901-914), sowie eine Cloud-Ausführungsvorrichtung (605) und eine Device-Ausführungsvorrichtung (655, 656) aufweist, und der Programmcode (800, 900) von einem ersten Programmteil (851, 951) und einem dritten Programmteil (853, 953) gebildet ist,
und der erste Programmteil (851, 951) eine erste Menge an Schichten (821, 921) des neuronalen Netzwerks bildet und von der Cloud-Ausführungsvorrichtung (605) ausgeführt wird und die Device-Ausführungsvorrichtung (655, 656) ansteuert,
und der dritte Programmteil (853, 953) eine dritte Menge an Schichten (823, 923) des neuronalen Netzwerks bildet und von der Device-Ausführungsvorrichtung (655, 656) ausgeführt wird und das technische Gerät (650) ansteuert,
und vom System ferner ein Konfigurations-Verfahren (700) ausgeführt wird, welches die erste und die dritte Menge an Schichten (821, 823, 921, 923) und den jeweiligen Programmteil (851, 853, 951, 953) entsprechend neu bestimmt, daraus den ersten und dritten Programmteil (851, 853, 951, 953) bestimmt und in die zugehörige Ausführungsvorrichtung (605, 655) lädt, und das System den Programmcode (800, 900) ausführt und das technische Gerät (650) ansteuert,
wobei das Konfigurations-Verfahren (700) von zumindest einer Eigenschaft des Programmcodes (800, 900) oder zumindest einer Eigenschaft des technischen Geräts (650) bestimmt ist.

2. Verfahren nach dem vorhergehenden Anspruch, wobei die erste und die dritte Menge an Schichten (821, 823, 921, 923) zusammen die Schichten (801-806, 811-813, 901-906, 909-914) des mehrschichtigen neuronalen Netzwerks bilden.

3. Verfahren zur Steuerung eines technischen Geräts (650) mittels einem Programmcode (800, 900), welcher durch ein System ausgeführt wird, und das System ein mehrschichtiges neuronales Netzwerk mit Schichten (801-813, 901-914), sowie eine Cloud-Ausführungsvorrichtung (605), eine Edge-Ausführungsvorrichtung (625, 626) und eine Device-Ausführungsvorrichtung (655, 656) aufweist und der Programmcode (800, 900) von einem ersten Programmteil (851, 951), einem zweiten Programmteil (852, 952) und einem dritten Programmteil (853, 953) gebildet ist,
und der erste Programmteil (851, 951) eine erste Menge an Schichten (821, 921) des neuronalen Netzwerks bildet und von der Cloud-Ausführungsvorrichtung (605) ausgeführt wird und die Edge-Ausführungsvorrichtung (625, 626) ansteuert,
und der zweite Programmteil (852, 952) eine zweite Menge an Schichten (822, 922) des neuronalen Netzwerks bildet und von der Edge- Ausführungsvorrichtung (625, 626) ausgeführt wird und die Device-Ausführungsvorrichtung (655, 656) ansteuert,
und der dritte Programmteil (853, 953) eine dritte Menge an Schichten (823, 923) des neuronalen Netzwerks bildet und von der Device-Ausführungsvorrichtung (655, 656) ausgeführt wird und das technische Gerät (650) ansteuert,
und ein Konfigurations-Verfahren (700) ausgeführt wird, welches die erste, die zweite und die dritte Menge an Schichten (821-823, 921-923) bestimmt, daraus den ersten, zweiten und dritten Programmteil (851-853, 951-953) bestimmt und in die zugehörige Ausführungsvorrichtung (605, 625, 655) lädt, und das System den Programmcode (800, 900) ausführt und das technische Gerät (650) ansteuert,
wobei das Konfigurations-Verfahren (700) von zumindest einer Eigenschaft des Programmcodes (800, 900) oder zumindest einer Eigenschaft des technischen Geräts (650) bestimmt ist.

4. Verfahren nach dem vorhergehenden Anspruch, wobei die erste, die zweite und die dritte Menge an Schichten (821-823, 921-923) zusammen die Schichten (801-813, 901-914) des mehrschichtigen neuronalen Netzwerks bilden.

5. Verfahren nach einem der vorhergehenden Ansprüche, wobei die Eigenschaften des Programmcodes (800, 900) die Eigenschaften des technischen Geräts oder die Eigenschaften des Programmcodes (800, 900) die Eigenschaften bei der Ansteuerung des technischen Geräts betreffen, vorzugsweise Quality-of-Service, Latenzzeit, Bandbreite für eine Datenübertragung.

6. Verfahren nach einem der vorhergehenden Ansprüche, wobei das Konfigurations-Verfahren (700) auf dem Prinzip des maschinellen Lernens beruht, vorzugsweise auf der Anwendung des Prinzips des "Reinforcement Learning" auf DDNN.

7. Verfahren nach einem der vorhergehenden Ansprüche, wobei das Konfigurations-Verfahren (700) fortlaufend ausgeführt wird und die erste, die zweite und die dritte Menge an Schichten (821-823, 921-923) und den jeweiligen Programmteil (851-853, 951-953) entsprechend neu bestimmt wird.

8. Verfahren nach einem der vorhergehenden Ansprüche, wobei das Konfigurations-Verfahren (700) erneut ausgeführt wird, wenn ein vorbestimmter Zeitpunkt erreicht ist oder ein vorbestimmtes Ereignis vorliegt.

9. Verfahren nach einem der vorhergehenden Ansprüche, wobei der Programmcode (800, 900) mehr als 10 Schichten (801-813, 901-914), bevorzugt mehr als 20 Schichten, besonders bevorzugt mehr als 50 Schichten, mehr als 100 Schichten, und insbesondere mehr als 150 Schichten aufweist.

10. System zur Steuerung eines technischen Geräts (650) mittels einem Programmcode (800, 900), wobei das System ein mehrschichtiges neuronales Netzwerk mit Schichten (801-813, 901-914), sowie eine Cloud-Ausführungsvorrichtung (605) und eine Device-Ausführungsvorrichtung (655, 656) aufweist, und der Programmcode (800, 900) von einem ersten Programmteil (851, 951) und einem dritten Programmteil (853, 953) gebildet ist,
und der erste Programmteil (851, 951) eine erste Menge an Schichten (821, 921) des neuronalen Netzwerks bildet und die Cloud-Ausführungsvorrichtung (605) dazu eingerichtet ist, den ersten Programmteil (851, 951) auszuführen die Device-Ausführungsvorrichtung (655, 656) anzusteuern,
und der dritte Programmteil (853, 953) eine dritte Menge an Schichten (823, 923) des neuronalen Netzwerks bildet und die Device-Ausführungsvorrichtung (655, 656) dazu eingerichtet ist, den dritten Programmteil (853, 953) auszuführen und das technische Gerät (650) anzusteuern,
und eine Konfigurations-Vorrichtung dazu eingerichtet ist, ein Konfigurations-Verfahren (700) auszuführen, welches die erste und die dritte Menge an Schichten (821-823, 921-923) bestimmt, daraus den ersten und dritten Programmteil (851, 951, 853, 953) bestimmt und in die zugehörige Ausführungsvorrichtung (605, 655) lädt, und das System dazu eingerichtet ist, den Programmcode (800, 900) auszuführen und das technische Gerät (650) anzusteuern,
wobei das Konfigurations-Verfahren (700) von zumindest einer Eigenschaft des Programmcodes (800, 900) oder zumindest einer Eigenschaft des technischen Geräts (650) bestimmt ist.

11. System zur Steuerung eines technischen Geräts (650) mittels einem Programmcode (800, 900), wobei das System ein mehrschichtiges neuronales Netzwerk mit Schichten (801-813, 901-914), sowie eine Cloud-Ausführungsvorrichtung (605), eine Edge-Ausführungsvorrichtung (625, 626) und eine Device-Ausführungsvorrichtung (655, 656) aufweist und der Programmcode (800, 900) von einem ersten Programmteil (851, 951), einem zweiten Programmteil (852, 952) und einem dritten Programmteil (853, 953) gebildet ist,
und der erste Programmteil (851, 951) eine erste Menge an Schichten (821, 921) des neuronalen Netzwerks bildet und eine Cloud dazu eingerichtet ist, die Cloud-Ausführungsvorrichtung (605) auszuführen und die Edge-Ausführungsvorrichtung (625, 626) anzusteuern,
und der zweite Programmteil (852, 952) eine zweite Menge an Schichten (822, 922) des neuronalen Netzwerks bildet und eine Edge-Ausführungsvorrichtung (625, 626) dazu eingerichtet ist, den zweiten Programmteil (852, 952) auszuführen und die Device-Ausführungsvorrichtung (655, 656) anzusteuern,
und der dritte Programmteil (853, 953) eine dritte Menge an Schichten (823, 923) des neuronalen Netzwerks bildet und die Device-Ausführungsvorrichtung dazu eingerichtet ist, den dritten Programmteil (853, 953) auszuführen und das technische Gerät (650) anzusteuern,
und eine Konfigurations-Vorrichtung dazu eingerichtet ist, ein Konfigurations-Verfahren (700) auszuführen, welches die erste, die zweite und die dritte Menge an Schichten (821-823, 921-923) bestimmt, daraus den ersten, zweiten und dritten Programmteil (851-853, 951-953) bestimmt und in die zugehörige Ausführungsvorrichtung (605, 625, 655) lädt, und das System dazu eingerichtet ist, den Programmcode (800, 900) auszuführen und das technische Gerät (650) anzusteuern,
wobei das Konfigurations-Verfahren (700) von zumindest einer Eigenschaft des Programmcodes (800, 900) oder zumindest einer Eigenschaft des technischen Geräts (650) bestimmt ist.

12. Vorrichtung nach dem vorhergehenden Anspruch, wobei die Edge-Ausführungsvorrichtung (625, 626) in Form eines Cloud-Service vorgesehen ist.

13. Vorrichtung nach einem der Ansprüche 9 bis 11, wobei die Cloud-Ausführungsvorrichtung (605) und/oder die Konfigurations-Vorrichtung in Form eines Cloud-Service vorgesehen ist.
